# EUROPÄISCHE PATENTSCHRIFT

(11) **EP 1 195 672 B1**
(45) Veröffentlichungstag und Bekanntmachung des Hinweises auf die Patenterteilung: **07.11.2007**
(21) Anmeldenummer: 01121329.5
(22) Anmeldetag: 06.09.2001
(51) Int. Cl.: G05G 1/04

(54) **Schalthebel für eine Steuerkonsole eines Arbeitsfahrzeugs**
Shift lever for working vehicle control console
Levier de vitesses pour console de contrôle d'un véhicule de chantier

(30) Priorität: 09.10.2000 US 686752
(43) Veröffentlichungstag der Anmeldung: 10.04.2002
(73) Patentinhaber: DEERE & COMPANY, Moline, Illinois 61265-8098 (US)
(72) Erfinder: Branscomb, David Andrew, Dubuque, IA 52001 (US); Klas, David Joseph, Dyersville (US)
(74) Vertreter: Lau-Loskill, Philipp

(56) Entgegenhaltungen:
- EP-A- 0 800 132
- DE-A- 2 902 455
- JP-A- 11 227 480
- US-A- 4 137 792
- US-A- 4 296 773
- US-A- 4 730 834
- US-A- 5 195 387

## Beschreibung

Die Erfindung betrifft einen Schalthebel für ein eine Steuerkonsole enthaltendes Arbeitsfahrzeug mit einem Arm, an dem oben ein Knauf angebracht ist und der mit einem zylindrischen Schaft versehen ist, wobei sich an dem Schaft eine erste Eindrehung und eine zweite Eindrehung befinden, wobei die erste und die zweite Eindrehung aneinander angrenzen und die erste Eindrehung tiefer als die zweite Eindrehung gefertigt ist, und wobei zur Anordnung zwischen dem Knauf und der Steuerkonsole eine Gummimanschette vorgesehen ist, die eine kreisförmige Steuerhebelöffnung mit einem nach innen gerichteten Flansch aufweist, der von der ersten Eindrehung aufgenommen wird.

Beim Betreiben eines Arbeitsfahrzeugs, beispielsweise einer Planierraupe, steuert die Bedienperson eine Vielzahl von Arbeitsoperationen durch Betätigung verschiedener Schalthebel, mit denen hydraulische Steuerventile eingestellt werden. Die hydraulischen Steuerventile wiederum regulieren den Volumenstrom des mit Druck beaufschlagten hydraulischen Mediums in den hydraulischen Zylindern, mit denen die Planierraupenschaufel betätigt wird.

Normalerweise ragen die Schalthebel aus einer sich in der Fahrzeugkabine befindlichen Steuerkonsole heraus, wobei der Schalthebel aus einem Arm und einem an ihm befestigten Knauf besteht. Der Arm ist operativ mit einem Ventil-Steuergestänge gekoppelt, mit der das hydraulische Steuerventil entsprechend der Bewegung des Schalthebels reguliert wird. Zur Betätigung des Schalthebels greift der Fahrzeugführer den Knauf des Schalthebels.

Die Steuerkonsole ist mit Steueröffnungen versehen, durch die die Schalthebel durchgeführt werden. Diese Öffnungen sind größer als der Schalthebeldurchmesser, damit der Schalthebel entsprechend ausgelenkt werden kann. Um zu verhindern, dass Staub, Schmutz und Ablagerungen in das Innere der Steuerkonsole gelangen, sollten die Steueröffnungen mit einer Gummimanschette bedeckt sein, welche am Schalthebel und dem Rand der Steueröffnung angreift. Durch eine Nut- und Federverbindung können diese Manschetten mit dem Knauf gekoppelt werden, wobei eine zusätzliche Befestigung in Form eines Klebers verwendet wird, um die Gummimanschette mit dem Schalthebelknauf zu verkleben.

In der US 4,730,834 wird ein Verbindungssystem für einen Schaltarm mit einer Gummimanschette offenbart, wobei das Verbindungssystem ähnlich einer oben beschriebenen Nut- und Federverbindung ausgebildet ist, nur dass die Verbindung direkt zwischen dem Schaltarm und der Manschette stattfindet. Aufgrund der Nut- Federverbindung weist das Verbindungssystem jedoch auch die oben genannten Nachteile auf.

Die US 4,296,773 offenbart einen Schaltarm, welcher eine Verbindung mit einer Manschette aufweist, wobei die Manschette mit einer Nut- und Federverbindung an eine auf dem Schaltarm gelagerte Buchse befestigt ist. Auch hier treten die oben genannten Nachteile auf.

Die JP11 227 480 offenbart ein Schalthebelsystem mit einer außen liegenden und einer innen liegenden Manschette. Die außen liegende Manschette ist auf herkömmliche Art mit einem Knauf des Schalthebels verklemmt oder verklebt, was die entsprechenden oben genannten Nachteile mit sich. Die innen liegende Manschette dient zur Abdichtung eines feststehenden Gehäuses, in welchem sich der oben genannte Schalthebel bewegt.

Als nächstliegender Stand wird eine Schalthebeleinrichtung angesehen, wie sie in US 5,195,387 offenbart ist. Die US 5,195,387 offenbart einen Schalthebel mit einem Arm, an dem ein Knauf angebracht ist. Der Knauf ist mit einem zylindrischen Schaft versehen ist, wobei sich an dem Schaft eine erste Eindrehung und eine zweite Eindrehung befinden, wobei die erste und die zweite Eindrehung aneinander angrenzen und die erste Eindrehung tiefer als die zweite Eindrehung gefertigt ist, und wobei zwischen dem Knauf und der Steuerkonsole eine Gummimanschette angeordnet ist, die eine kreisförmige Steuerhebelöffnung mit einem nach innen gerichteten Flansch aufweist, der von der ersten Eindrehung aufgenommen wird. Die Steuerhebelöffnung weist einen zweiten nach innen gerichteten Flansch auf, der von einer dritten am Schaft angeordneten Eindrehung aufgenommen wird. Durch die drei Eindrehungen am Schaft in Verbindung mit den beiden nach innen gerichteten Flanschen werden zwei zusammenhängende Nut- und Federverbindungen geschaffen, die eine Montage der Gummimanschette am Schaft erschweren und aufwändig machen.

Die der Erfindung zugrunde liegende Aufgabe wird darin gesehen, eine einfachere Ausführung zur Verbindung von Schalthebelknauf und Gummimanschette derart vorzuschlagen, dass keine zusätzliche Befestigung benötigt wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Ein Schalthebel eines Arbeitsfahrzeugs ragt aus der Steueröffnung einer Steuerkonsole heraus. Der Schalthebel besteht aus einem Arm und einem Knauf. Ein Ende des Armes ist mit dem Ventil-Steuergestänge zur Ansteuerung des Steuerventils verbunden, das andere Ende des Armes ist mit dem Knauf verbunden.

In einer Ausführungsform der Erfindung ist der Knauf mit einem zylindrischen Schaft versehen, auf dem sich eine erste und eine zweite Eindrehung befinden. Die erste und die zweite Eindrehung grenzen aneinander an und bilden somit eine doppelstufige Eindrehung. Die erste Eindrehung ist tiefer als die zweite und besitzt demnach einen kleineren Innendurchmesser. Zwischen Knauf und Steuerkonsole ist eine Gummimanschette angeordnet. Die Gummimanschette besitzt eine kreisförmige Schalthebelöffnung, durch die der Schalthebel hindurchführt. Die kreisförmige Schalthebelöffnung ist mit einem nach innen gerichteten Flansch versehen. Der nach innen gerichtete Flansch ist in die erste Eindrehung eingepasst. Ein nach unten gerichteter, vom Flansch ausgehender Ringfuß ist in die zweite Eindrehung eingepasst. Der nach innen gerichtete Flansch und der nach unten gerichtete Ringfuß sind, entsprechend der radialen Unterschiede der Innendurchmesser der ersten und zweiten Eindrehung, vorzugsweise durch eine Abstufung mit radial verlaufender Verbindungsfläche voneinander abgesetzt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht einer Planierraupe mit Schalthebel und
- Fig. 2: den Querschnitt einer Gummimanschetten-Schaltknauf-Verbindung

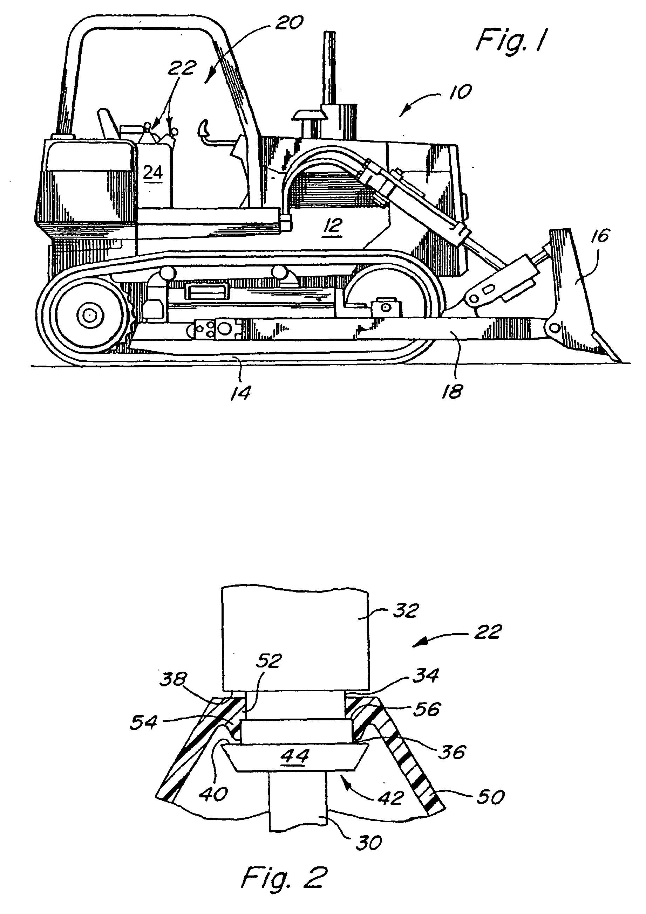

Fig. 1 veranschaulicht ein Arbeitsfahrzeug 10, bestehend aus einer Planierraupe. Das Arbeitsfahrzeug 10 ist mit einem Rahmen 12 sowie zur Fortbewegung des Fahrzeugs 10 mit auf dem Boden laufenden Laufbahnen 14 versehen. Der Rahmen 12 ist mit einer Arbeitsvorrichtung in Form einer Planierraupenschaufel 16 ausgerüstet, die über ein Betätigungsgestänge 18 mit dem Rahmen 12 gekoppelt ist. Die Position der Planierraupenschaufel 16 relativ zum Rahmen 12 wird über hydraulische Zylinder gesteuert. Der Fahrzeugführer steuert das Fahrzeug 10 sowie die Position der Planierraupenschaufel 16 von der Fahrzeugkabine 20 aus. Der Fahrzeugführer betätigt dabei die Schalthebel 22, welche aus der Steuerkonsole 24 ragen. Obwohl die vorliegende Erfindung hier am Beispiel einer Planierraupe beschrieben wird, kann diese auch für andere Arbeitsfahrzeuge, rad- oder laufbahngetrieben, genutzt werden.

Jeder Schalthebel 22 besteht aus einem Arm 30 und einem sich an ihm befindlichen Knauf 32. Ein Ende des Arms 30 ist mit dem Ventil-Steuergestänge (nicht gezeigt) verbunden, das andere Ende mit dem Knauf 32. Der Fuß des Knaufs 32 ist mit einer ersten Eindrehung 34 und mit einer sich daran anschließenden zweiten Eindrehung 36 versehen. Die erste Eindrehung 34 befindet sich zwischen der zweiten Eindrehung 36 und einer ersten radial ausgerichteten Fläche 38. Die zweite Eindrehung 36 befindet sich zwischen der ersten Eindrehung 34 und einer zweiten radial ausgerichteten Fläche 40. Die erste Eindrehung 34 ist tiefer ausgeprägt als die zweite Eindrehung 36. Das heißt, der Innendurchmesser der ersten Eindrehung 34 ist kleiner als der Innendurchmesser der zweiten Eindrehung 36. Die zweite radial angebrachte Fläche 40 ist Teil eines Flansches 42, der mit einer konischen Fase 44 versehenen ist.

Zwischen der Steuerkonsole 24 und dem Knauf 32 ist eine Abdichtungs-Gummimanschette 50 angeordnet. Die Gummimanschette 50 besitzt eine kreisförmige Schalthebelöffnung, durch die der Arm 30 des Schalthebels hindurchgeführt wird. Der Knauf 32 wird dann auf den Arm 30 gesteckt, und der Flansch 42 wird durch die kreisförmige Schalthebelöffnung gepresst. Die konische Fase 44 vereinfacht dabei den Einpressvorgang des Knaufs 32 in die kreisförmige Schalthebelöffnung. Die kreisförmig ausgebildete Schalthebelöffnung ist mit einem radial nach innen gerichteten Flansch 52 versehen. Der Flansch 52 ist mit einem nach unten gerichteten Ringfuß 54 versehen. Der nach innen gerichtete Flansch 52 wird von der ersten Eindrehung 34 und der nach unten gerichtete Ringfuß 54 wird von der zweiten Eindrehung 36 aufgenommen. Eine Abstufung 56, die dem radialen Unterschied zwischen den Innendurchmessern der Eindrehungen 34, 36 entspricht, trennt den nach innen gerichteten Flansch 52 und den nach unten gerichteten Ringfuß 54 voneinander.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Schalthebel für ein eine Steuerkonsole (24) enthaltendes Arbeitsfahrzeug (10) mit einem Arm (30), an dem oben ein Knauf (32) angebracht ist und der mit einem zylindrischen Schaft versehen ist, wobei sich an dem Schaft eine erste Eindrehung (34) und eine zweite Eindrehung (36) befinden, wobei die erste und die zweite Eindrehung (34, 36) aneinander angrenzen und die erste Eindrehung (34) tiefer als die zweite Eindrehung gefertigt ist, und wobei zur Anordnung zwischen dem Knauf (32) und der Steuerkonsole (24) eine Gummimanschette (50) vorgesehen ist, die eine kreisförmige Steuerhebelöffnung mit einem nach innen gerichteten Flansch (52) aufweist, der von der ersten Eindrehung (34) aufgenommen wird, **dadurch gekennzeichnet, dass** die Steuerhebelöffnung einen nach unten gerichteten Ringfuß (54) aufweist, der von der zweiten Eindrehung (36) aufgenommen wird, wobei der nach innen gerichtete Flansch (52) und der nach unten gerichtete Ringfuß (54) durch eine Abstufung (56) voneinander getrennt sind.

2. Schalthebel nach Anspruch 1, **dadurch gekennzeichnet, dass** die erste Eindrehung (34) einen ersten Innendurchmesser besitzt, die zweite Eindrehung (36) einen zweiten Innendurchmesser besitzt und der erste Innendurchmesser kleiner als der zweite Innendurchmesser ist.

3. Schalthebel nach Anspruch 1 und 2, **dadurch gekennzeichnet, dass** der Knauf (32) mit einer ersten radial ausgerichteten Fläche (38) versehen ist, die an die erste Eindrehung (34) angrenzt, wobei sich die erste Eindrehung (34) zwischen der ersten radial ausgerichteten Fläche (38) und der zweiten Eindrehung (36) befindet.

4. Schalthebel nach einem der Ansprüche 1 bis 3, **dadurch gekennzeichnet, dass** der Knauf (32) mit einem Flansch (42) versehen ist, der an die zweite Eindrehung (36) angrenzt, so dass die zweite Eindrehung (36) zwischen der ersten Eindrehung (34) und dem Flansch (42) angebracht ist.

5. Schalthebel nach Anspruch 4, **dadurch gekennzeichnet, dass** der Flansch (42) mit einer zweiten radial angebrachten Fläche (40) versehen ist, die an die zweite Eindrehung (36) angrenzt.

6. Schalthebel nach Anspruch 4 oder 5, **dadurch gekennzeichnet, dass** der Flansch (42) mit einer konischen Fase (44) versehen ist.

## Claims

1. Gearshift lever for a working vehicle (10) containing a control console (24), having an arm (30) to which, at the top, a knob (32) is attached and which is provided with a cylindrical stem, wherein a first turned groove (34) and a second turned groove (36) are present on the stem, wherein the first and the second turned groove (34, 36) are mutually adjoining and the first turned groove (34) is deeper than the second turned groove, and wherein, for the arrangement between the knob (32) and the control console (24), a rubber sleeve (50) is provided, which has a circular control lever opening with an inwardly directed flange (52) which is received by the first turned groove (34), **characterized in that** the control lever opening has a downwardly directed annular foot (54) which is received by the second turned groove (36), the inwardly directed flange (52) and the downwardly directed annular foot (54) being mutually separated by a step (56).

2. Gearshift lever according to Claim 1, **characterized in that** the first turned groove (34) possesses a first internal diameter, the second turned groove (36) possesses a second internal diameter and the first internal diameter is smaller than the second internal diameter.

3. Gearshift lever according to Claims 1 and 2, **characterized in that** the knob (32) is provided with a first radially aligned face (38), adjoining the first turned groove (34), the first turned groove (34) being located between the first radially aligned face (38) and the second turned groove (36).

4. Gearshift lever according to one of Claims 1 to 3, **characterized in that** the knob (32) is provided with a flange (42), adjoining the second turned groove (36), so that the second turned groove (36) is placed between the first turned groove (34) and the flange (42).

5. Gearshift lever according to Claim 4, **characterized in that** the flange (42) is provided with a second radially aligned face (40), adjoining the second turned groove (36).

6. Gearshift lever according to Claim 4 or 5, **characterized in that** the flange (42) is provided with a conical bevel (44).

## Revendications

1. Levier de vitesses pour un véhicule de chantier (10) comportant une console de commande (24) avec un bras (30), sur lequel un pommeau (32) est placé en haut et qui est doté d'une tige cylindrique, une première gorge (34) et une seconde gorge (36) se trouvant sur la tige, la première et la seconde gorges (34, 36) étant contiguës et la première gorge (34) étant fabriquée à un niveau plus bas que la seconde gorge, et un manchon en caoutchouc (50) étant prévu pour l'agencement entre le pommeau (32) et la console de commande (24), lequel manchon présente une ouverture de levier de commande de forme circulaire avec une bride (52) dirigée vers l'intérieur, qui est réceptionnée par la première gorge (34), **caractérisé en ce que** l'ouverture de levier de commande présente une base annulaire (54) dirigée vers le bas, qui est réceptionnée par la seconde gorge (36), la bride (52) dirigée vers l'intérieur et la base annulaire (54) dirigée vers le bas étant séparées l'une de l'autre par un dégradé (56).

2. Levier de vitesses selon la revendication 1, **caractérisé en ce que** la première gorge (34) présente un premier diamètre intérieur, la seconde gorge (36) présente un second diamètre intérieur et le premier diamètre intérieur est inférieur au second diamètre intérieur.

3. Levier de vitesses selon les revendications 1 et 2, **caractérisé en ce que** le pommeau (32) est doté d'une première surface (38) orientée radialement, qui est contiguë à la première gorge (34), la première gorge (34) se trouvant entre la première surface (38) orientée radialement et la seconde gorge (36).

4. Levier de vitesses selon l'une quelconque des revendications 1 à 3, **caractérisé en ce que** le pommeau (32) est doté d'une bride (42), qui est contiguë à la seconde gorge (36), de sorte que la seconde gorge (36) est placée entre la première gorge (34) et la bride (42).

5. Levier de vitesses selon la revendication 4, **caractérisé en ce que** la bride (42) est dotée d'une seconde surface (40) placée radialement, qui est contiguë à la seconde gorge (36).

6. Levier de vitesses selon la revendication 4 ou 5, **caractérisé en ce que** la bride (42) est dotée d'un chanfrein (44) conique.
